Europäisches Patentamt

**European Patent Office**

**Office européen des brevets**

(19)

(11) Numéro de publication: **0 136 975**
**B1**

(12)

# FASCICULE DE BREVET EUROPÉEN

(45) Date de publication du fascicule du brevet:
**04.01.89**

(51) Int. Cl.⁴: **B 23 H 7/04**

(21) Numéro de dépôt: **84810406.3**

(22) Date de dépôt: **20.08.84**

(54) **Dispositif pour détecter l'endroit où se produit une décharge le long du fil-électrode d'une machine à électro-érosion.**

(30) Priorité: **07.09.83 CH 4893/83**

(43) Date de publication de la demande:
**10.04.85 Bulletin 85/15**

(45) Mention de la délivrance du brevet:
**04.01.89 Bulletin 89/1**

(84) Etats contractants désignés:
**DE FR GB**

(56) Documents cité:
**GB-A-2 055 068**

(73) Titulaire: **CHARMILLES TECHNOLOGIES S.A., 8-10, rue du Pré- de- la- Fontaine, CH- 1217 Meyrin 1 (CH)**

(72) Inventeur: **Martin, Roland, Beloux Dingy en Vuache, Valleiry (FR)**

(74) Mandataire: **Ardin, Pierre, PIERRE ARDIN & CIE 22, rue du Mont- Blanc Case postale 60, CH- 1211 Genève 1 (CH)**

EP 0 136 975 B1

## Description

L'invention concerne un dispositif pour détecter l'endroit où se produit une décharge le long de la zone d'usinage sur une machine pour découper par décharges électriques érosives une pièce-électrode au moyen d'un fil-électrode, ce dispositif pilotant un circuit électronique relié à un dispositif d'alarme ou de contrôle de courant d'usinage et comportant deux lignes pour amener le courant d'usinage sur le fil de chaque côté de la zone d'usinage comprise entre ces électrodes et un générateur d'impulsions, connecté entre la pièce et ces lignes.

Cette mesure est indispensable pour surveiller les contraintes thermiques du fil, dues à l'apport de chaleur des décharges et à l'effet Joule du courant d'usinage traversant le fil. En effet, cet apport de chaleur peut dépasser une limite acceptable et provoquer une rupture du fil, si une concentration de décharges se produit à un endroit particulier du fil. Une détection de cette concentration de décharge par une surveillance de l'endroit où se produit une décharge peut donc permettre de prévenir une rupture du fil.

Une technique connue pour détecter l'endroit où se produit une décharge, qui est décrite dans la demande de brevet Japonaise N° 5 364 899, consiste à mesurer la résistance du fil entre l'endroit où se produit une décharge et l'un des contacts d'amenée de courant sur le fil. Cette technique présente l'inconvénient de mesurer une chute de tension sur cette partie du fil, ce qui rend cette mesure très imprécise, du fait de la très basse impédance du circuit où est effectué cette mesure.

Une autre technique décrite dans la même publication consiste à mesurer le déséquilibre de tension d'un pont de Wheatstone, dont un des côtés est constitué par la longueur du fil comprise entre les deux contacts d'amenée de courant, situés de chaque côté de la zone d'usinage. Cette méthode n'est utilisable que si les décharges se produisent toutes avec le même niveau de courant. Dans le cas contraire, par exemple pour les générateurs à relaxation, qui sont fréquemment utilisés sur les machines électro-érosives à fil, le courant des décharges varie en relation avec la tension à laquelle s'amorce cette décharge, et l'amplitude du déséquilibre de tension du pont de mesure varie avec le niveau de ce courant. Dans ce cas, cette technique de mesure est inutilisable.

L'invention a pour but d'éliminer les défauts et les limitations de ces techniques connues, au moyen d'un dispositif comportant deux lignes pour amener le courant d'usinage sur le fil de chaque côté de la zone d'usinage.

Par la demande de brevet anglais publiée GB-A-2 055 068, on connaît un dispositif de ce type comportant un circuit de mesure différentielle du niveau d'un signal électrique caractéristique de la position d'une décharge dans la zone d'usinage, des circuits permettant de mémoriser le niveau du signal lors de la décharge et de mesurer l'ecart entre ce niveau mémorisé et le niveau du signal lors de la décharge suivante et des circuits pour comparer cet ecart avec une valeur référence. Ce dispositif connu exige la présence de plusieurs composantes logiques, ce qui le rend relativement coûteux.

Le dispositif selon l'invention est caractérisé en ce que le circuit électronique est agencé pour établir des signaux correspondant à la différence et à la somme des courants $i_1$ et $i_2$ circulant respectivement dans chacune de ces lignes lors de chaque décharge ainsi qu'à élaborer une grandeur proportionnelle au quotient de cette différence par cette somme.

Le dispositif présente l'avantage d'être très précis et de s'appliquer à des décharges, dont le niveau de courant est variable.

Le dessin annexé représente schématiquement et à titre d'exemple, une forme d'exécution du dispositif, objet de l'invention.

La figure 1 représente le schéma de principe d'une machine électro-érosive à fil, munie d'un dispositif pour mesurer la position d'une décharge.

La figure 2 illustre un exemple de réalisation du circuit électrique du dispositif, représenté à la figure 1.

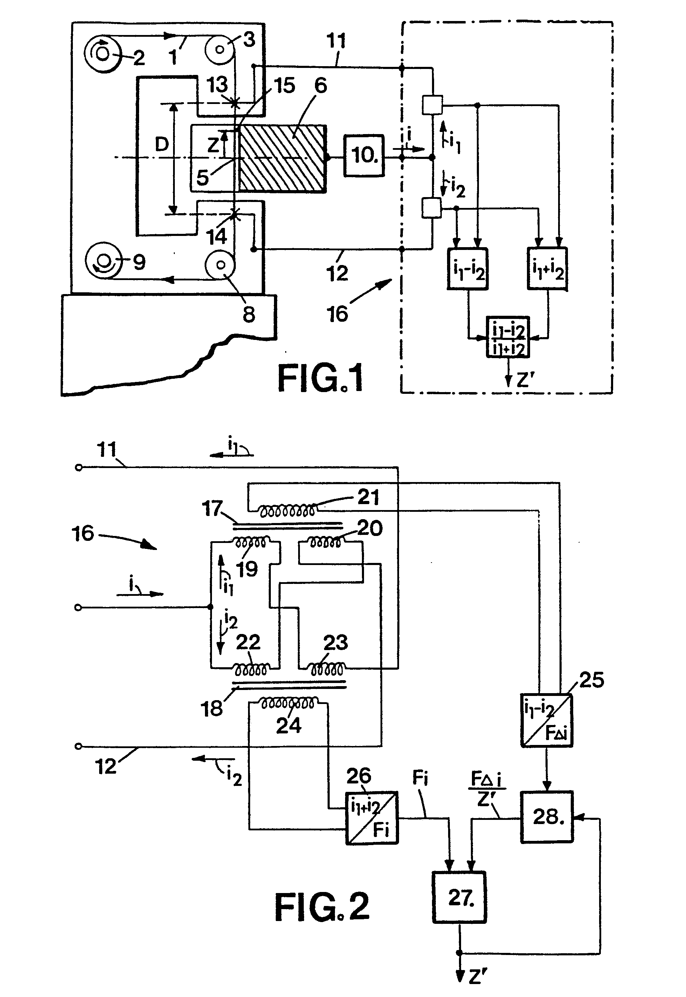

Dans la machine à découper par décharges électriques érosives, représentée à la figure 1, l'électrode-fil 1 est déroulé d'une bobine débitrice 2, passe sur un galet 3, traverse la zone d'usinage 5 pour effectuer le découpage d'une électrode-pièce 6, puis passe sur un galet 8 pour être enroulé sur une bobine réceptrice 9. La machine comprend un générateur d'impulsions 10, connecté d'une part à l'électrode-pièce 6 et d'autre part à deux lignes 11, 12, destinées à amener le courant d'usinage i à l'électrode-fil 1 par deux contacts 13, 14, disposés de chaque côté de la zone d'usinage 5.

La position où se produit une décharge 15 se trouve à une distance Z de la moitié de la longueur D du fil 1, comprise entre les deux contacts 13 et 14. On peut démontrer que

$$Z = \frac{D}{2} \cdot \frac{i_1 - i_2}{i_1 + i_2}$$

$i_1$ étant le courant passant par la ligne 11
$i_2$ étant le courant passant par la ligne 12

Le circuit électrique 16 établit des signaux correspondant à la somme et à la différence des courants $i_1$ et $i_2$, puis il calcule une grandeur Z' égale au quotient de la différence des deux courants par la somme de ces deux courants. Cette grandeur Z' est proportionnelle à la distance Z et le facteur de proportionnalité est égal à la moitié de la longueur D du fil, comprise entre les deux contacts 13 et 14.

L'exemple de réalisation du circuit 16, illustré à la figure 2 comprend deux transformateurs de courant 17, 18, destinés à déterminer la différence et la somme des courants $i_1$, $i_2$. Les enroulements primaires 19, 20 du transformateur 17 sont montés en opposition, de façon à élaborer dans l'enroulement 21 un courant secondaire, correspondant à une soustraction des deux flux, créés par les courants $i_1$, $i_2$ parcourant les deux lignes 11, 12, tandis que les enroulements primaires 22, 23 du second transformateur 18 sont orientés de façon que le courant secondaire dans l'enroulement 24 corresponde à une addition des flux.

Les courants secondaires de chacun des transformateurs sont appliqués à deux convertisseurs de fréquence 25, 26 pour former des signaux de fréquence $Fi$ et $F\triangle i$.

Le signal de fréquence $Fi$ correspondant à la somme des courants secondaires $i_1$ et $i_2$ est appliqué à l'une des entrées d'un compteur-décompteur 27, tandis que l'autre signal de fréquence $F\triangle i$, correspondant à la soustraction des courants secondaires $i_1$ et $i_2$ est appliqué à un diviseur de fréquence 28, constitué par un circuit BRM. La sortie de ce diviseur 28 est appliquée à l'autre entrée du compteur-décompteur 27 et le signal digital de sortie de ce dernier est utilisé pour piloter le BRM et définir son facteurde division instantané. Dans cette disposition, connue en soi, le signal de sortie du compteur-décompteur 27 modifie le facteur de division du BRM, jusqu'à ce que l'on obtienne $\frac{F\triangle i}{Z'} = Fi$, de sorte que le signal de sortie du compteur 27 ne varie plus. On se trouve alors dans la situation où $Z' = \frac{F\triangle i}{Fi}$. Bien entendu, les signaux de fréquence $Fi$ et $F\triangle i$ doivent présenter une fréquence beaucoup plus élevée que la fréquence des décharges érosives, pour qu'il soit possible d'obtenir une valeur stable de $Z'$, dans l'intervalle de temps séparant deux décharges érosives successives.

Les signaux $Z'$ obtenus sont bien entendu destinés à être appliqués à un dispositif d'alarme ou de contrôle du courant d'usinage.

Il est bien entendu que l'on pourrait réaliser ces opérations par d'autres circuits. En particulier, on pourrait ajouter ou soustraire analogiquement des signaux proportionnels à $i_1$ et $i_2$, générés chacun séparément par un transformateur de courant.

On pourrait aussi mesurer la somme des courants $i_1$ et $i_2$ directement à la sortie du generateur d'impulsions 10 et la différence de ces courants en mesurant la différence de potentiel entre les deux contacts 13 et 14 qui amènent le courant d'usinage sur le fil, par exemple en shuntant ces deux contacts et en mesurant le courant circulant dans ce shunt.

**Revendications**

1. Dispositif pour détecter l'endroit où se produit une décharge le long de la zone d'usinage (5) sur une machine pour découper par décharges électriques érosives une pièce-électrode (6) au moyen d'un fil-électrode (1), ce dispositif pilotant un circuit électronique relié à un dispositif d'alarme ou de contrôle de courant d'usinage et comportant deux lignes électriques (11, 12) pour amener le courant d'usinage (i) sur le fil (1) de chaque côté de la zone d'usinage (5) comprise entre ces électrodes (1, 6) et un générateur d'impulsions (10) connecté entre la pièce (6) et ces lignes (11, 12) <u>caractérisé</u> en ce que le circuit électronique (16) est agencé pour établir des signaux correspondant à la différence et à la somme des courants $i_1$ et $i_2$ circulant respectivement dans chacune de ces lignes (11, 12) lors de chaque décharge (15) ainsi qu'à élaborer une grandeur proportionnelle au quotient de cette différence par cette somme.

2. Dispositif selon la revendication 1, <u>caractérisé</u> en ce que ledit circuit électronique (16), pour établir la différence et la somme des courants, comporte deux transformateurs de courant (17, 18), comprenant chacun deux enroulements primaires (19, 20 ou 22, 23), parcourus respectivement par le courant d'une ligne et de l'autre ligne, le sens de branchement de ces enroulements primaires étant différent dans un transformateur et dans l'autre, de façon à obtenir dans un transformateur (18) un courant secondaire correspondant à la somme des courants primaires et dans l'autre (17) un courant secondaire correspondant à la différence de ces courants.

3. Dispositif selon la revendication 2, <u>caractérisé</u> en ce que ledit circuit (16) comprend deux convertisseurs de fréquence (25, 26), destinés chacun à transformer un des deux courants secondaires en un signal de fréquence, un compteur-décompteur (27) et un circuit diviseur de fréquence (28), l'un des deux signaux de fréquence étant appliqué à l'une des entrées du compteur-décompteur (27), et l'autre signal de fréquence étant appliqué a une deuxième entrée du compteur-décompteur par l'intermédiaire d'un circuit diviseur de fréquence (28), dont le facteur de division est fourni par la sortie du compteur-décompteur.

**Patentansprüche**

1. Vorrichtung zur Ortsfeststellung wo eine Entladung längs der Bearbeitungszone (5) auf einer Maschine zum elektrisch funkenerosiven Schneiden einer Werkstückelektrode (6) mittels einer Drahtelektrode (1) stattfindet, wobei diese Vorrichtung eine elektronische Schaltung steuert, die mit einer Alarm- oder Kontrollvorrichtung des Bearbeitungsstromes verbunden ist und die zwei elektrische Leitungen (11, 12), um den Bearbeitungsstrom (i) auf den Draht (1) auf beiden Seiten der zwischen diesen Elektroden (1, 6) gelegenen Bearbeitungszone (5) zu führen, und einen Impulserzeuger (10) aufweist, welcher zwischen dem Werkstück (6) und diesen Leitungen (11, 12) geschaltet ist, dadurch gekennzeichnet, dass die elektronische Schaltung (16) derart angeordnet ist, um Signale zu bilden, die der Differenz und der Summe der

Ströme $i_1$ und $i_2$ entsprechen, welche respektive in jeder dieser Leitungen (11, 12) bei jeder Entladung (15) fliessen, sowie um eine Grösse zu erzeugen, die dem Quotient dieser Differenz geteilt durch diese Summe entspricht.

2. Vorrichtung gemäss Anspruch 1, dadurch gekennzeichnet, dass die benannte elektronische Schaltung (16) zur Erstellung der Differenz und der Summe der Ströme zwei Stromtransformatoren (17, 18) aufweist, von denen jeder zwei Primärwicklungen (19, 20 oder 22, 23) umfasst, die respektive vom Strom der einen oder anderen Leitung durchflossen werden, wobei die Schaltungsrichtung dieser Primärwicklungen im einen und anderen Transformator verschieden sind, so dass im einen Transformator (18) ein der Summe der Primärströme entsprechender Sekundärstrom und im anderen (17) ein der Differenz dieser Ströme entsprechender Sekundärstrom erhalten wird.

3. Vorrichtung gemäss Anspruch 2, dadurch gekennzeichnet, dass die benannte Schaltung (16) zwei Frequenzwandler (25, 26), von denen jeder dazu dient, einen der zwei Sekundärströme in ein Frequenzsignal umzuwandeln, einen Vorwärts-Rückwärts-Zähler (27) und eine Frequenzteilerschatung (28) aufweist, wobei eines der zwei Frequenzsignale einem der Eingänge des Vorwärts-Rückwärts-Zählers (27) zugeführt wird, und wobei das andere Frequenzsignal einem zweiten Eingang des Vorwärts-Rückwärts-Zählers über eine Frequenzteilerschaltung (28) zugeführt wird, dessen Teilungsfaktor durch den Ausgang des Vorwärts-Rückwärts-Zählers geliefert wird.

## Claims

1. Device to detect the location where an electrical discharge takes place along the machining zone (5) on a machine for cutting by electroerosive discharges an electrode workpiece (6) by means of an electrode wire (1), said device driving an electronic circuit connected to an alarm device or to a device for controlling the machining current and comprising two electric lines (11, 12) for supplying the machining current (i) to the wire (1) on either side of the machining zone (5) located between these electrodes and a pulse generator (10) connected between said workpiece (6) and these lines (11, 12), characterized in that the electronic circuit (16) is arranged for establishing signals corresponding to the difference and the sum of the currents $i_1$ and $i_2$ flowing respectively in each of said lines (11, 12) in the course of each discharge (15), and for elaborating a quantity proportional to the quotient of said difference by said sum.

2. Device according to claim 1, characterized in that said electronic circuit (16) for establishing the difference and the sum of the currents comprises two transformers (17, 18) having each two primary windings (19, 20 or 22, 23) traversed respectively by the current of one line and of the other line, the winding direction of these primary windings being different in one transformer and in the other, so as to obtain in one transformer (18) a secondary current corresponding to the sum of the primary currents and in the other (17) a secondary current corresponding to the difference ot these currents.

3. Device according to claim 2, characterized in that said circuit (16) comprises two frequency converters (25, 26) intended each for transforming one of the two secondary currents into a frequency signal, an up-down counter (27) and a frequency divider circuit (28), one of said two frequency signals being applied to one input of the up-down counter (27), and the other frequency signal being applied to a second input of the up-down counter through the frequency divider (28) whose dividing factor is supplied by the output of the up-down counter.

**FIG. 1**

**FIG. 2**